# EUROPÄISCHE PATENTANMELDUNG

(11) **EP 3 396 314 A1**
(43) Veröffentlichungstag der Anmeldung: **31.10.2018**
(21) Anmeldenummer: 17167995.4
(22) Anmeldetag: 25.04.2017
(51) Int. Cl.: G01C 15/06, G01C 15/00, B23B 49/00

(54) **PEILSTAB UND VERMESSUNGSSTATION**

(71) Anmelder: HILTI Aktiengesellschaft, 9494 Schaan (LI)
(72) Erfinder: Schmidt, Peer, 88131 Lindau (DE); Bralla, Dario, 9470 Buchs (CH)
(74) Vertreter: Hilti Aktiengesellschaft Corporate Intellectual Property

(57) **Zusammenfassung**

Ein Peilstab **3** ist für ein Vermessungssystem **1,** welches eine einen bewegten Lichtstrahl **5** ausgebende Basisstation **2** enthält. Der Peilstab hat eine Spitze **24** zum Positionieren auf einem Vermessungspunkt P. Ein ortsauflösender Lichtsensor **27** gibt ansprechend auf einen Einfall des Lichtstrahls **5** einen Auftreffpunkt T aus. Eine Auswertungseinheit gibt ansprechend auf eine Übereinstimmung des Auftreffpunkts T mit einem Referenzpunkt R einen ersten Steuerbefehl zum Stoppen einer Bewegung des Lichtstrahls **5** und bei einer Abweichung des Auftreffpunkts T von dem Referenzpunkt R einen zweiten Steuerbefehl zum Bewegen des Lichtstrahls **5** in Richtung zu dem Referenzpunkt R aus. Eine Kommunikationseinrichtung **45** dient zum Übermittels des Steuerbefehls an die Basisstation **2.**

## Beschreibung

### GEBIET DER ERFINDUNG

Die vorliegende Erfindung betrifft einen Peilstab, ein Vermessungssystem und Steuerungsverfahren.

### OFFENBARUNG DER ERFINDUNG

Der erfindungsgemäße Peilstab ist für ein Vermessungssystem, welches eine einen bewegten Lichtstrahl ausgebende Basisstation enthält. Der Peilstab hat eine Spitze zum Positionieren auf einem Vermessungspunkt. Ein ortsauflösender Lichtsensor gibt ansprechend auf einen Einfall des Lichtstrahls einen Auftreffpunkt aus. Eine Auswertungseinheit gibt ansprechend auf eine Übereinstimmung des Auftreffpunkts mit einem Referenzpunkt einen ersten Steuerbefehl zum Stoppen einer Bewegung des Lichtstrahls und bei einer Abweichung des Auftreffpunkts von dem Referenzpunkt einen zweiten Steuerbefehl zum Bewegen des Lichtstrahls in Richtung zu dem Referenzpunkt aus. Eine Kommunikationseinrichtung dient zum Übermittels des Steuerbefehls an die Basisstation. Der Peilstab erleichtert das Ausrichten einer Basisstation oder das Vermessen eines Punkts mit der Basisstation. Der Peilstab kann auf einem bekannten oder zu bestimmenden Vermessungspunkt positioniert werden. Der Peilstab sorgt dann für eine korrekte Ausrichtung des Lichtstrahls und weist bei erfolgter Ausrichtung die Basisstation an, die Orientierung zwischen Peilstab und Basisstation anhand des Lichtstrahls zu ermitteln.

Ein Vermessungssystem mit dem vorhergehenden Peilstab hat ferner eine Basisstation, die einen Ständer zum Aufstellen an einem Standort, eine Lichtquelle zum Erzeugen des Lichtstrahls, eine drehbare Optik zum Ablenken des Lichtstrahls in eine Emissionsrichtung, einen Antrieb zum Drehen der Emissionsrichtung, eine Steuerung des Antriebs und einen mit der Steuerung gekoppelten Empfänger zum Empfangen der Steuerbefehle von dem Peilstab, aufweist. Eine Protokolleinrichtung dient zum Aufzeichnen der Emissionsrichtung bei einem Auftreffen des Lichtstrahls auf dem Referenzpunkt zugehörig zu dem Vermessungspunkt eingerichtet ist.

Ein Steuerungsverfahren das Vermessungssystem basiert auf den Schritten: Erfassen des Lichtstrahls mit dem ortsauflösenden Lichtsensor des Peilstabs; Auswerten, ob der Lichtstrahl versetzt zu dem Referenzpunkt auf den Lichtsensor fällt; Übermitteln eines Steuerbefehls von dem Peilstab an die Basisstation, wobei der Steuerbefehl eine Drehbewegung des Lichtstrahls in Richtung zu dem Referenzpunkt veranlasst; und Übermitteln eines Steuerbefehls zum Anhalten der Drehbewegung des Lichtstrahls, wenn der Lichtstrahl auf den Referenzpunkt fällt.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 ein Vermessungssystem in einer Seitenansicht
Fig. 2 das Vermessungssystem in einer Draufsicht

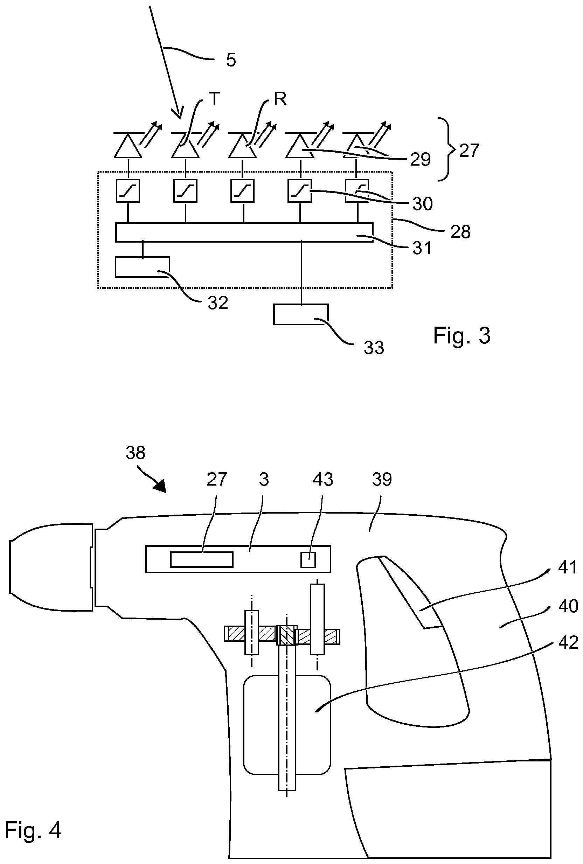

Fig. 3 eine Auswertungseinheit
Fig. 4 eine Handwerkzeugmaschine

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

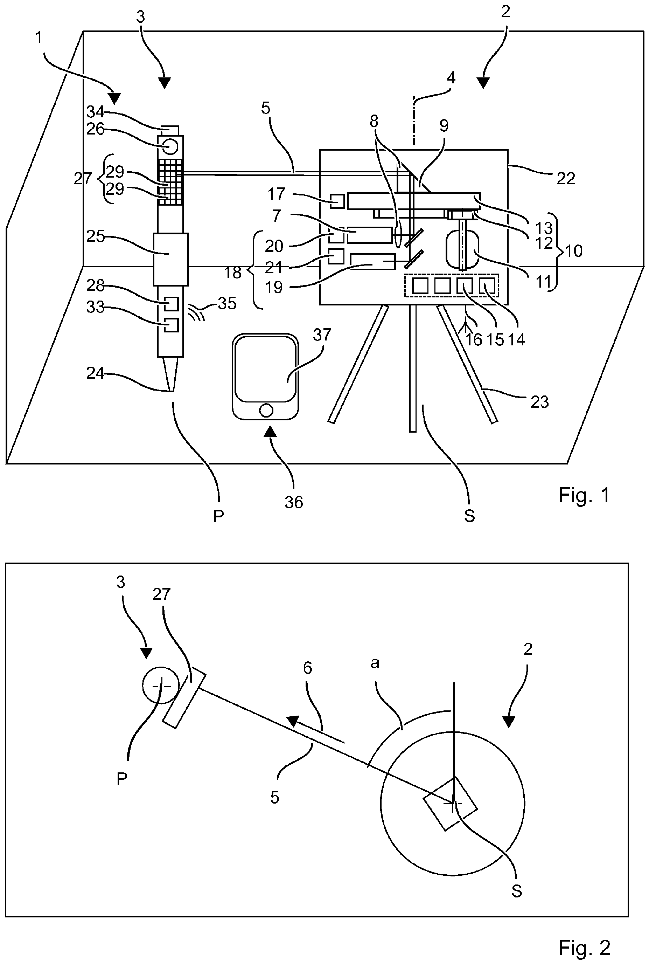

Fig. 1 und Fig. 2 zeigen schematisch ein Vermessungssystem **1** in einem Raum. Das Vermessungssystem **1** beinhaltet eine Basisstation **2** und einen Peilstab **3.** Die Basisstation **2** stellt der Anwender an einem Standort **S** in dem Raum auf. Der Peilstab **3** wird an zu vermessenden Vermessungspunkten **P** in dem Raum positioniert. Das Vermessungssystem **1** bestimmt die relative Position des Peilstabs **3** zu der Basisstation **2** und ermittelt daraus Koordinaten der Vermessungspunkte **P.** Die nachfolgenden Ausführungen erläutern eine Bestimmung der Koordinaten in einer horizontalen Ebene. Analog können mit dem Vermessungssystem **1** auch Koordinaten in einer vertikalen Ebene bestimmt werden, und sei dies durch Kippen der Anordnung um 90 Grad. Die Koordinaten der Vermessungspunkte **P** werden in einem lokalen Koordinatensystem des Vermessungssystems **1** erfasst. Das beispielhafte lokale Koordinatensystem nutzt zylindrische Koordinaten. Der Ursprung des lokalen Koordinatensystems fällt mit einer vertikalen Achse **4** der Basisstation **2** zusammen; ein Azimut **a** (Horizontalwinkel) gibt den Winkel im Urzeigersinn bezüglich der Himmelsrichtung nach Norden an. Alternative Koordinatensysteme, z.B. kartesische Koordinaten; andere Festlegung des Ursprungs, z.B. in eine vertikale Achse des Peilstabs **3,** können verwendet werden. Unter Kenntnis der Koordinaten und Orientierung des Standorts **S** in einem Referenzsystem können die lokalen Koordinaten in Koordinaten des Referenzsystems transformiert werden.

Die Basisstation **2** emittiert einen einzelnen Lichtstrahl **5** in den Raum. Dem Ausführungsbeispiel gemäß liegt die Emissionsrichtung **6** des Lichtstrahls **5** in der horizontalen Ebene. Eine Emissionsrichtung **6** des Lichtstrahls **5** geht von der vertikalen Achse **4** aus, d.h. gemäß dem oben gewählten Koordinatensystem ist die Emissionsrichtung **6** durch den Azimut **a** bestimmt. Die Basisstation **2** kann die Emissionsrichtung **6,** d.h. den Azimut **a**, kontinuierlich oder schrittweise ändern. Bei der beispielhaften Basisstation **2** kann der Azimut **a** auf jeden Winkel des Vollkreises eingestellt werden. Der Azimut **a** kann auch auf einen auf einen Sektor des Vollkreises beschränkt sein.

Eine Lichtquelle **7** der Basisstation **2** erzeugt den Lichtstrahl **5.** Die Lichtquelle **7** ist vorzugsweise eine Laserlichtquelle, z.B. eine Laserdiode. Der Lichtstrahl 5 kann mittels einer Strahlformungsoptik aus ein oder mehreren optischen Elementen, z.B. Linsen, Blenden, geformt und kollimiert werden.

Eine Optik **8** gibt die Emissionsrichtung **6** des Lichtstrahls **5** vor. Wenigstens ein optisches Element der Optik **8** ist beweglich, um die Emissionsrichtung **6** zu verändern. Bei dem illustrierten Aufbau führt die Optik **8** den Lichtstrahl **5** entlang der vertikalen Achse **4** oder nahezu entlang der vertikalen Achse **4.** Ein Prisma **9** ist auf der Achse **4** angeordnet. Eine zu der Achse **4** geneigte und reflektierende Facette lenkt den Lichtstrahl **5** aus der vertikalen Achse **4** in die horizontale Ebene. Das Prisma **9** ist um die vertikale Achse **4** drehbar gelagert. Die geneigte Facette weist entsprechend der Drehstellung des Prismas **9** in verschiedene Emissionsrichtungen, wodurch in Folge der Lichtstrahl **5** in die verschiedenen Emissionsrichtung **6** abgelenkt wird. Anstelle eines Prismas **9** können andere vollständig oder teilweise reflektierende optische Elemente wie Spiegel, Gitter, etc. verwendet werden. Das bewegte optische Element kann das letzte von dem Lichtstrahl **5** durchlaufene optische Element sein, welches Einfluss auf die Strahlführung nimmt. In anderen Ausführungsformen können mehrere optische Elemente bewegt, unter Anderem kann der gesamte optische Aufbau einschließlich der Lichtquelle **7** um die Achse **4** drehbar sein.

Die Basisstation **2** hat einen Antrieb **10,** welcher das Prisma **9** oder ggf. die weiteren optischen Elemente um die Achse **4** drehend antreibt. Eine beispielhafter Antrieb **10** basiert auf einem herkömmlichen Elektromotor **11.** Der Elektromotor **11** treibt über ein Feingetriebe **12** einen Drehteller **13** an. Das Prisma **9** ist auf dem Drehteller **13** angeordnet. Der illustrierte mechanische Aufbau ist nur beispielhaft. Dem Fachmann sind weitere Konstruktionen bekannt, um ein optisches Element mit hoher Präzision durch einen Elektromotor zu bewegen. Anstelle einer kontinuierlichen Rotation um die vertikale Achse **4** kann das Prisma **9** periodisch vor- und zurückkippenden angeordnet sein. Beispielsweise kann das Prisma **9** auf einer über einen Exzenter angetriebenen Wippe angeordnet sein. Ferner kann das bewegte optische Element durch einen Mikrospiegelaktor realisiert sein.

Eine Basissteuerung **14** (Steuerung auf der Basisstation **2**) kontrolliert die Bewegung des Antriebs **10.** Die Basissteuerung **14** kann die Drehgeschwindigkeit des Antriebs **10** und damit des Prismas **9** vorgeben. Im Minimum kann die Basissteuerung **14** die Drehgeschwindigkeit zwischen Null und einer vorgegebenen Drehgeschwindigkeit variieren. Vorzugsweise kann die Basissteuerung **14** die Drehgeschwindigkeit in mehreren Stufen oder kontinuierlich zwischen Null und einer maximalen Drehgeschwindigkeit einstellen. Die Basissteuerung **14** kann beispielsweise auch eine Drehrichtung vorgeben und diese zwischen einem Linkslauf und einem Rechtslauf umschalten.

Die Basissteuerung **14** enthält eine Kommunikationsschnittstelle **15,** über welche die Basissteuerung **14** Steuerungsbefehle empfangen kann. Die Steuerungsbefehle können den Antrieb **10** ein- und ausschalten, ggf. die Drehrichtung und/oder Drehgeschwindigkeit festlegen. Die Kommunikationsschnittstelle **15** ist drahtlos, vorzugsweise eine kurzreichweitige, funkbasierte Schnittstelle alternative eine optische Schnittstelle. Die funkbasierte Schnittstelle enthält eine Antenne **16** über welche die die Steuerungsbefehle enthaltenen Funkwellen empfangen werden. Die verwendeten Trägerfrequenzen und Übertragungsprotokolle können einem der üblichen Standards entsprechen, z.B. dem ISM-Band und Bluetooth.

Die Basisstation **2** hat einen Winkelencoder **17** zum Ermitteln der aktuellen Emissionsrichtung **6.** Der Winkelencoder **17** kann in unterschiedlichen Bauformen umgesetzt sein. Beispielsweise ist der Drehteller **13** mit umlaufenden Markierungen versehen, welche von einem Sensor abgetastet werden. Die Markierungen können Striche, Kerben, magnetische Markierungen, etc. sein, der Sensor ist entsprechend ein optischer, magnetischer oder anderweitiger Sensor. Der Azimut **a** kann unmittelbar in den Markierungen kodiert sein oder der Winkelencoder **17** ermittelt über die Anzahl an dem Sensor vorbeibewegten Markierungen den aktuellen Azimut **a**. Der Winkelencoder **17** kann ferner in dem Antrieb **10** angeordnet sein. Insbesondere kann die Drehstellung des Elektromotors, z.B. eines bürstenlosen Elektromotors, abgetastet sein. Die Basissteuerung **14** empfängt den von dem Winkelencoder **17** ermittelten Azimut **a**.

Die Basisstation **2** enthält einen optischen Distanzmesser **18.** Der optische Distanzmesser **18** basiert auf einem Lichtdetektor **19,** welcher von einem Objekt rückreflektierte Anteile des Lichtstrahls **5** erfasst. Die reflektierten Anteile verlaufen antiparallel zu der Emissionsrichtung **6** und können durch das Prisma **9** in die Optik **8** zurückgeführt werden. Ein Strahlteiler lenkt die Anteile auf den Lichtdetektor **19.** Der Lichtdetektor **19** ermittelt die Laufzeit von dem Aussenden des Lichtstrahls **5** in die Emissionsrichtung **6** bis zum Eintreffen auf dem Lichtdetektor **19.** Die Laufzeit ist ein Maß für die Distanz zu dem Objekt in der Emissionsrichtung **6.** Für die Bestimmung der Laufzeit kann der Lichtstrahl **5** beispielsweise gepulst werden. Die Intensität des Lichtstrahls **5** wird durch ein Modulator **20** moduliert. Der Modulator **20** ist mit einem Zeitnehmer **21** synchronisiert. Der Zeitnehmer **21** ermittelt die Laufzeit zwischen dem Zeitpunkt des Einprägens einer Modulation in den Lichtstrahl **5** und dem Erfassen dieser Modulation durch den Lichtdetektor **19.** Die Modulation kann ein einfaches Ein- und Ausschalten des Lichtstrahls **5** beinhalten. Vorzugsweise wird der Intensität ein Muster mit mehreren Helligkeitsstufen aufgeprägt. Der Modulator **20** kann durch eine Modulation des Versorgungsstroms der Lichtquelle **7** erfolgen. Ergänzend oder alternativ kann die Intensität mittels elektrooptischen oder akustooptischen Modulatoren verändert werden.

Eine Messung des optischen Distanzmessers **18** kann durch die Basissteuerung **14** mittels eines Steuersignals oder eines Steuerbefehls veranlasst werden. Der optische Distanzmesser **18** führt eine Messung durch und übergibt den Messwert an die Basissteuerung **14.** Der optische Distanzmesser **18** kann sich danach selbsttätig deaktivieren. In einer Ausführung kann die Basisstation **2** den Distanzmesser **18** deaktivieren. In einem deaktivierten Zustand ist vorzugsweise der Modulator **20** deaktiviert. Der Lichtstrahl **5** hat bei einem deaktivierten oder inaktiven Distanzmesser **18** eine konstante Intensität.

Die Lichtquelle **7** und die Optik **8** sind in einem schützenden Gehäuse **22** der Basisstation **2** angeordnet. Das Gehäuse **22** kann pendelnd an einem Ständer **23** aufgehängt sein, wodurch die Optik **8** entlang der Schwerkraft ausrichtet ist. Die Emissionsrichtung **6** ist hierdurch in einem gewissen Umfang unabhängig von der Aufstellung der Basisstation **2** horizontal, d.h. senkrecht zu der Schwerkraft. Der Ständer **23** kann drei telekopierbare Beine aufweisen, welche eine kippfreie und stabile Aufstellung Mittels der teleskopierbaren Beine kann die Höhe des Gehäuses **22** und damit die Ebene der Emissionsrichtung **6** eingestellt werden.

Der Peilstab **3** hat eine Spitze **24,** welche auf dem Vermessungspunkt **P** positioniert wird. Der beispielhafte Peilstab **3** ist im Gegensatz zu der Basisstation **2** nicht freistehend, sondern muss durch den Anwender an einem Griff **25** während einer Messung gehalten werden. Der Peilstab **3** kann eine Libelle **26** oder ähnliche Messeinrichtung aufweisen, welche dem Anwender unterstützt, den Peilstab **3** vertikal ausgerichtet zu halten.

Der Lichtstrahl **5** der Basisstation **2** kann an einem (Auftreff-) Punkt **T** auf den Peilstab **3** fallen. Ob der Lichtstrahl **5** auf den Peilstab **3** fällt hängt von dem Vermessungspunkt **P** und der aktuellen Emissionsrichtung **6** des Lichtstrahls **5** ab. Die Basisstation **2** lässt den Lichtstrahl **5** in einem

Der Peilstab **3** hat einen ortsauflösenden Lichtsensor **27.** Der Lichtsensor **27** erfasst ob, und ggf. wo der Lichtstrahl **5** der Basisstation **2** auf den Peilstab **3** fällt. Der (Auftreff-) Punkt **T,** an dem der Lichtstrahl **5** auf den Lichtsensor **27** fällt, hängt von dem Vermessungspunkt **P** und der Emissionsrichtung **6** des Lichtstrahls **5** ab. In einem Basismodus dreht die Basisstation **2** den Lichtstrahl **5** kontinuierlich um die vertikale Achse **4.** Der ortsauflösende Lichtsensor **27** wird entsprechend wiederholt getroffen. Der Anwender hat Sorge zu tragen, dass kein Hindernis zwischen der Basisstation **2** und dem Lichtsensor **27** liegt und der Lichtsensor **27** auf der Höhe der Emissionsrichtung **6** liegt.

In der Ausführungsform hat der Lichtsensor **27** zumindest in der horizontalen Richtung eine Ortsauflösung. Der Peilstab **3** hat einen Referenzpunkt **R,** beispielsweise eine Mitte des Lichtsensors **27.** Eine Auswertungseinheit **28** ermittelt, ob der Lichtstrahl **5** auf den Referenzpunkt **R,** links versetzt zu dem Referenzpunkt **R** oder rechts versetzt zu dem Referenzpunkt **R** auf den Lichtsensor **27** fällt.

Der Lichtsensor **27** kann durch mehrere lichtemittierende Halbleiterbauelemente (LED) gebildet sein. Die LEDs **29** sind in der horizontalen Ebene nebeneinander angeordnet. Eine mittlere der LEDs **29** ist beispielsweise der Referenzpunkt **R.** Eine LED **29** erzeugt eine Spannungsänderung beim Einfall des intensiven Lichtstrahls **5** von der Basisstation **2.** Den LEDs **29** sind Komparatoren **30** nachgeschaltet, um die Spannungsänderung zu detektieren. Jeder LED **29** kann ein Komparator **30** zugeordnet sein, alternativ können mittels eines Multiplexers die LED **29** in Gruppen zusammengefasst und zeitlich versetzt auf eine Spannungsänderung geprüft werden. Der Komparator **30** kann beispielsweise durch einen analogen Schwellwert-Komparator oder einer digitalen Verarbeitung in einem Prozessor **31** mit vorgeschaltetem Analog-Digital-Wandler realisiert sein.

Die Auswertungseinheit **28** kann auf einer Verschaltung der LEDs **29** oder der Komparatoren **30** basieren. Das Signal des Komparators an der Referenz LED ergibt ein "ausgerichtet" Signal. Die Signale der Komparatoren **30** links von der Referenz LED können zu einem "links" Signal gebündelt werden; die Signale der Komparatoren **30** rechts von der Referenz LED können zu einem "rechts" Signal gebündelt werden. In einer Weiterbildung kann die Auswertungseinheit **28** den Abstand der Lichtstrahls **5** von dem Referenzpunkt **R** ermitteln. Die Auswertungseinheit **28** kann durch diskrete Bauelemente, einen integrierten Schaltkreis oder einen in einem Prozessor **31** ablaufenden Prozess realisiert sein. Zu den Signalen sind entsprechende Steuerbefehle in einem Speicher **32** der Auswertungseinheit **28** hinterlegt. Die Steuerbefehle entsprechen den Steuerbefehlen der Basissteuerung **14** in der Basisstation **2.** Der Peilstab **3** hat eine drahtlose Kommunikationsschnittstelle **33,** welche mit der Kommunikationsschnittstelle **15** der Basisstation **2** kommuniziert. Der Peilstab **3** kann über die Kommunikationsschnittstelle **15** die Steuersignale übermitteln und darüber mittelbar den Antrieb **10** der Basisstation **2** steuern.

Der Peilstab **3** hat ein Bedienelement **34,** im einfachsten Fall einen Taster. Das Bedienelement **34** aktiviert eine Routine des Peilstabs **3,** welche den Lichtstrahl **5** der Basisstation 2 auf den Referenzpunkt **R** ausrichtet. Die Routine kann durch einen Prozessor **31** ausgeführt werden.

Die Routine kann bei einem erstmaligen Aufruf einen Basismodus der Basisstation **2** ausführen. Der Basisstation **2** wird ein Steuersignal zum Einschalten der Lichtquelle **7** übermittelt. Ein Steuersignal **35** zum Drehen der Emissionsrichtung **6** wird übermittelt. Eine Drehrichtung ist beliebig. Beispielsweise wird ein Drehen nach links veranlasst. Sofern die Basisstation **2** unterschiedliche Drehgeschwindigkeiten der Emissionsrichtung **6** ermöglicht, wird ein Steuersignal **35** zum Setzen auf die höchste oder eine hohe Drehgeschwindigkeit von dem Peilstab **3** übermittelt. Der Lichtstrahl **5** kreist mit hoher Geschwindigkeit und zeichnet eine horizontale Linie auf die Wände. In regelmäßigen Intervallen überstreicht der Lichtstrahl **5** dabei den Peilstab **3.**

Die Routine wartet auf ein Auftreffen des Lichtstrahls **5** auf den ortsauflösenden Lichtsensor **27.** Sobald der Lichtstrahl **5** erfasst wird, übermittelt der Peilstab **3** vorzugsweise einen Steuerbefehl zum Verringern der Drehgeschwindigkeit. Aufgrund der Trägheit der Basisstation **2** kann der Lichtstrahl **5** bereits den Referenzpunkt **R** passiert haben. In diesem Fall wird ein Steuerbefehl zum Umkehren der Drehrichtung an die Basisstation **2** übermittelt. Falls in den verfügbaren Steuerbefehlen vorhanden, kann der Peilstab **3** einfach einen Steuerbefehl "Drehrichtung umkehren" übermitteln. Andernfalls ermittelt der Peilstab **3** die Bewegungsrichtung des Lichtstrahls **5.** Bei einer Bewegungsrichtung von links nach rechts, zeigen zuerst die LEDs links von dem Referenzpunkt **R** ein Signal und danach die LEDs rechts von dem Referenzpunkt **R.** Die Auswertungseinheit **28** kann aus der Abfolge auf welche der Bereiche des Lichtsensors **27** der Lichtstrahl **5** nacheinander fällt die Bewegungsrichtung bestimmen. Die Auswertungseinheit **28** gibt darauf einen Steuerbefehl mit einer Richtung gegenläufig zu der bestimmten Bewegungsrichtung aus. Wenn der Lichtstrahl **5** auf den Referenzpunkt **R** fällt, wird ein "Stop" Steuerbefehl übermittelt, um die Drehbewegung der Emissionsrichtung **6** zu stoppen. Der Peilstab **3** kann eine Verzögerung schätzen, welche zwischen einer Ausgabe des "Stop" Steuersignals und dem tatsächlichen Ruhen der Emissionsrichtung **6** vergeht. Der Peilstab **3** übermittelt entsprechend der geschätzten oder hinterlegten Verzögerung das "Stop" Steuersignal vor Erreichen des Referenzpunkts an die Basisstation **2.** Falls der Lichtstrahl **5** nach einem "Stop" Steuersignal rechts von dem Referenzpunkt **R** zu ruhen kommt, gibt der Peilstab **3** einen Steuerbefehl zum Drehen der Emissionsrichtung **6** nach links aus, d.h. zu dem Referenzpunkt **R** hin. Analog gibt der Peilstab **3** einen Steuerbefehl zum Drehen der Emissionsrichtung **6** nach rechts aus, wenn der Lichtpunkt links von dem Referenzpunkt **R** stehen bleibt. Die Emissionsrichtung **6** kann mehrfach angepasst werden, bis der Lichtstrahl **5** auf dem Referenzpunkt **R** zum Ruhen kommt. Der Peilstab **3** übermittelt den "ausgerichtet" Steuerbefehl an die Basisstation **2.**

Der Peilstab **3** kann die jeweilige LED **29** aufleuchten lassen, auf welche der Lichtstrahl **5** gerade fällt. Der Anwender erhält eine unmittelbare Rückmeldung über das Ausrichten des Lichtstrahls **5.** Dies ist insbesondere gegenüber klassischen ortsauflösenden Photodetektoren vorteilhaft, auf welchen der Lichtstrahl **5** kaum zu erkennen ist.

Die Basisstation **2** ermittelt ansprechend auf den "ausgerichtet" Steuerbefehl die Emissionsrichtung **6,** d.h. in dem Ausführungsbeispiel den Azimut **a**. Die Emissionsrichtung **6** stimmt mit der Richtung zu dem Peilstab **3** und damit zu dem Vermessungspunkt **P** überein. Die Basisstation **2** kann die Emissionsrichtung **6** an den Peilstab **3** übertragen. Der Peilstab **3** kann auf den Wert der Emissionsrichtung **6** warten oder diesen mittels eines Steuerbefehls abfragen.

Der Peilstab **3** kann eine Distanzmessung durch die Basisstation **2** anfragen, indem ein entsprechender Steuerbefehl übermittelt wird. Die Basisstation **2** kann den Antrieb **10** für die Dauer der Distanzmessung deaktivieren. Der Distanzmesser **18** wird eingeschaltet. Die Distanzmessung ermittelt die Distanz zwischen dem Peilstab **3** und der Basisstation **2.** Die Distanz kann dem Peilstab **3** automatisch übermittelt werden, oder der Peilstab **3** kann die Distanz mittels eines Steuerbefehls abfragen.

Die Emissionsrichtung **6** und die Distanz legen die Koordinaten des Vermessungspunkts **P** in dem Raum gegenüber der Basisstation **2** fest. Die Koordinaten können in einer Protokolleinrichtung **36** des Peilstabs **3** abgelegt werden. Die Vermessungspunkte **P** können chronologisch ihrer Aufzeichnung entsprechend in der Protokolleinrichtung **36** abgelegt werden. Ferner kann eine Eingabeeinrichtung, z.B. Tastatur, vorgesehen sein, welche dem Anwender ermöglichen Textinformationen zu den Koordinaten des Vermessungspunkts **P** abzulegen.

Die Protokolleinrichtung **36** kann in dem Peilstab **3,** der Basisstation **2** oder einer externen Einheit, z.B. einem Smartphone oder ähnlichem Mobilgerät, realisiert sein. Das Smartphone hat eine standardisierte drahtlose Schnittstelle, z.B. Bluetooth, welche einen Datenaustausch mit dem Peilstab **3** ermöglicht. Der Peilstab **3** kann die Daten an eine auf dem Smartphone laufende Applikation übermitteln. Die Applikation kann dem Anwender auf einem Display **37** einen nächsten Vermessungspunkt **P** anzeigen. Das Display kann auch an dem Peilstab **3** angeordnet sein. Der Anwender wählt den Vermessungspunkt **P** in der Applikation aus und startet eine Vermessung des Vermessungspunkts **P** mit dem Peilstab **3,** wie zuvor beschrieben. Die Vermessung wird anschließend von dem Peilstab **3** von der Applikation dem ausgewählten Vermessungspunkt **P** zugeordnet.

Eine Kalibrierungsroutine für die Basisstation **2** nutzt ein oder mehrere Vermessungspunkte **P,** um die Koordinaten und Orientierung des Standorts **S** in einem Referenzsystem zu bestimmen. Zu wenigstens zwei Vermessungspunkten **P** sind die Koordinaten in dem Referenzsystem bekannt. Beispielsweise sind die Vermessungspunkte **P** geographische Landmarken oder seitens eines Bauplans vorgegebene Landmarken. Die Koordinaten der Vermessungspunkte **P** können wie zuvor in dem lokalen Koordinatensystem der Basisstation **2** bestimmt werden. Hierbei kann eine Bestimmung des Emissionsrichtung **6** ausreichend sein, eine Bestimmung der Distanz zwischen der Basisstation **2** und dem Peilstab **3** auf dem Vermessungspunkt **P** kann unterstützend ermittelt werden. Eine Transformationsmatrix für die lokalen Koordinaten in Koordinaten des Referenzsystems kann durch den Vergleich der Koordinaten der Vermessungspunkte **P** in den beiden Koordinatensystemen ermittelt werden. Die Transformationsmatrix kann auf die lokalen Koordinaten des Standorts **S** angewandt werden, um den Standort **S** und Orientierung der Basisstation **2** in den Koordinaten des Referenzsystems zu erhalten. Die Transformationsmatrix oder die dafür relevanten Daten können z.B. von dem Peilstab **3,** an die Basisstation **2** übermitteln werden, damit die Basisstation **2** nachfolgende Messungen in dem Referenzsystem ermittelt, d.h. das lokale Koordinatensystem auf das Referenzsystem abbildet.

Der Anwender kann für die Kalibrierungsroutine mittels des Displays **37** unterstützt werden. Ansprechend auf ein Auswählen der Kalibrierungsroutine mit dem Bedienelement **34,** werden auf dem Display **37** Landmarken mit bekannten Koordinaten in einem globalen Koordinatensystem angezeigt. Der Anwender kann eine der Landmarken auswählen. Daraufhin setzt der Anwender den Peilstab **3** an die ausgewählte Landmarke, und bestätigt dies mit einem Tastendruck an dem Bedienelement **34.** Der Peilstab **3** ermittelt wie zuvor beschrieben den Azimut **a** für diese Landmarke. Der Anwender wird angewiesen eine zweite Landmarke auszuwählen. Das Verfahren wird mit der zweiten Landmarke wiederholt. Anschließend bestimmt das Vermessungssystem **1** basierend auf den bestimmten Azimut und den beiden globalen Koordinaten die Koordinaten der Basisstation **2.**

Die LEDs **29** können in vertikaler Richtung über mehrere Zentimeter ausgedehnt sein. Alternativ können mehrere LEDs **29** zu einer vertikalen Spalte zusammengeschaltet sein. Der Peilstab **3** kann dann ohne aufwändige vertikale Ausrichtung den Lichtstrahl **5** erfassen. In weitere Ausgestaltung ist der ortsauflösende Lichtsensor **27** sowohl in horizontaler als auch vertikalen Richtung ortsauflösend. Beispielsweise kann die Auswertungseinheit **28** ermitteln, welche der in einer Spalte vertikal angeordneten LEDs **29** von dem Lichtstrahl **5** getroffen ist. Der vertikale Abstand der jeweiligen LEDs **29** zu der Spitze **24** des Peilstabs **3** sind bekannt. Der vertikale Abstand kann in einem Speicher des Peilstabs **3** hinterlegt sein. Bei einer Vermessung eines Vermessungspunkts **P** kann der vertikale Abstand zusammen mit den horizontalen Koordinaten in der Protokolleinrichtung **36** abgelegt werden.

Der Anwender kann einen Verfolgungsmodus an dem Peilstab **3** auswählen. Das Bedienelement **34** hat eine entsprechende Wahlstellung. Der Peilstab **3** führt das oben genannte Verfahren aus, bis der Lichtstrahl **5** auf den Referenzpunkt **R** ruht. In dem Verfolgungsmodus kann der Anwender den Peilstab **3** nun bewegen. Die Auswertungseinheit **28** erkennt einen zunehmenden Versatz des Auftreffpunkts **T** gegenüber dem Referenzpunkt **R.** Die Auswertungseinheit **28** gibt ein Steuersignal **35** aus, welches übermittelt an die Basisstation **2** die Emissionsrichtung **6** in Richtung zu dem Referenzpunkt **R** korrigiert. Die Basisstation **2** führt in dem Verfolgungsmodus vorzugsweise keine Ermittlung der Emissionsrichtung **6** oder der Distanz zu dem Peilstab 3 durch. Eine Ermittlung der Emissionsrichtung **6** und der Distanz wird vorzugsweise durch erst durch eine Aufforderung des Anwenders ausgelöst, beispielsweise ansprechend auf Betätigen des Bedienelements **34.**

In einer Ausführungsform kann der Peilstab **3** an einer Handwerkzeugmaschine **38** befestigt sein. Die Handwerkzeugmaschine **38** hat ein Gehäuse **39** mit einem Handgriff **40.** Der Anwender kann die Handwerkzeugmaschine **38** mit dem Handgriff **40** führen und im Betrieb halten. Die Handwerkzeugmaschine **38** wird mit einem Haupttaster **41** aktiviert, welcher vorzugsweise an dem Handgriff **40** angeordnet ist. Der Haupttaster **41** startet einen Antrieb **42,** z.B. einen Elektromotor, Verbrennungsmotor, Verbrennungskammer mit Hubzylinder. Typische Handwerkzeugmaschinen **38** sind Elektroschrauber, Kreissägen, Bohrhämmer, Elektromeißel, Setzgeräte, etc.

Der Peilstab **3** an der Handwerkzeugmaschine **38** ermöglicht ein Tracken der Handwerkzeugmaschine **38.** Der Peilstab **3** arbeitet in dem obig beschriebenen Verfolgungsmodus. Ansprechend auf ein aktivierten der Handwerkzeugmaschine **38** veranlasst der Peilstab **3** ein Bestimmen des Azimut **a** und vorzugsweise der Distanz zwischen Peilstab **3** und Basisstation **2,** um die Koordinaten der Handwerkzeugmaschine **38** zu bestimmen. Der Peilstab **3** enthält beispielsweise einen Vibrationssensor **43,** um die Aktivität der Handwerkzeugmaschine **38** basierend auf den Vibrationen zu erkennen. Alternativ kann der Peilstab **3** über eine Kommunikationsschnittstelle **15** die Betätigung des Haupttasters **41** mittgeteilt werden. Ferner kann der Peilstab **3** in der Handwerkzeugmaschine **38** integriert mit der Elektronik der Handwerkzeugmaschine **38** verbunden sein. Die Koordinaten können zusammen mit der Aktivität in der Protokolleinrichtung **36** abgelegt werden.

## Patentansprüche

1. Peilstab (3) für ein Vermessungssystem (1), das eine einen bewegten Lichtstrahl (5) ausgebende Basisstation (2) enthält, mit
einer Spitze (24) zum Positionieren auf einem Vermessungspunkt (P),
einem ortsauflösenden Lichtsensor (27), der ansprechend auf einen Einfall des Lichtstrahls (5) einen Auftreffpunkt (T) ausgebend ist,
einer Auswertungseinheit (28), welche ansprechend auf eine Übereinstimmung des Auftreffpunkts (T) mit einem Referenzpunkt (R) einen ersten Steuerbefehl zum Stoppen einer Bewegung des Lichtstrahls (5) und bei einer Abweichung des Auftreffpunkts (T) von dem Referenzpunkt (R) einen zweiten Steuerbefehl zum Bewegen des Lichtstrahls (5) in Richtung zu dem Referenzpunkt (R) ausgebend ist,
und einer Kommunikationseinrichtung (33) zum Übermittels des Steuerbefehls an die Basisstation (2).

2. Peilstab (3) nach Anspruch 1, **dadurch kennzeichnet, dass** der ortsauflösende Lichtsensor (27) mehrere regelmäßig angeordnete Leuchtdioden (29) enthält.

3. Peilstab (3) nach Anspruch 1 oder 2, **dadurch kennzeichnet, dass** die Auswertungseinheit (28) einen Speicher (32) enthält, in welchem ein Satz Steuerbefehle zum Ansteuern der Basisstation (2) abgelegt ist, wobei ein Steuerbefehl die Basisstation (2) den Lichtstrahl (5) in einem Uhrzeigersinn und ein Steuerbefehl den Lichtstrahl (5) entgegen dem Uhrzeigersinn drehen lässt.

4. Peilstab (3) nach Anspruch 1 bis 3, **dadurch kennzeichnet, dass** die Auswertungseinheit (28) einen Speicher (32) enthält, in welchem ein Satz Steuerbefehle zum Ansteuern der Basisstation (2) abgelegt ist, wobei ein Steuerbefehl die Basisstation (2) einen Azimut (a) des Lichtstrahls (5) in seiner aktuellen Emissionsrichtung (6) bestimmen lässt.

5. Peilstab (3) nach einem der vorhergehenden Ansprüche, **dadurch kennzeichnet, dass** der Peilstab (3) an einem Gehäuse einer Handwerkzeugmaschine (38) befestigt ist.

6. Vermessungssystem (1) mit
einem Peilstab (3) nach einem der vorhergehenden Ansprüche und
einer Basisstation (2), die einen Ständer (23) zum Aufstellen an einem Standort (S), eine Lichtquelle (7) zum Erzeugen des Lichtstrahls (5), eine drehbare Optik (8) zum Ablenken des Lichtstrahls (5) in eine Emissionsrichtung (6), einen Antrieb (10) zum Drehen der Emissionsrichtung (6), eine Steuerung (14) des Antriebs (10) und einen mit der Steuerung (14) gekoppelten Empfänger (44) zum Empfangen der Steuerbefehle von dem Peilstab (3), aufweist,
einer Protokolleinrichtung (36), die zum Aufzeichnen der Emissionsrichtung (6) bei einem Auftreffen des Lichtstrahls (5) auf dem Referenzpunkt (R) zugehörig zu dem Vermessungspunkt (P) eingerichtet ist.

7. Vermessungssystem (1) nach Anspruch 6, **dadurch kennzeichnet, dass** die Basisstation (2) einen Winkelencoder (17) zum Bestimmen einer aktuellen Emissionsrichtung (6) des Lichtstrahls (5) aufweist.

8. Vermessungssystem (1) nach Anspruch 6 oder 7, **dadurch kennzeichnet, dass** die Basisstation (2) einen Distanzmesser (18) aufweist, welcher basierend auf dem emittierten Lichtstrahl (5) eine Entfernung zu dem Peilstab (3) ermittelt.

9. Steuerungsverfahren für ein Vermessungssystem (1) nach Anspruch 6 mit den Schritten Erfassen des Lichtstrahls (5) mit dem ortsauflösenden Lichtsensor (27) des Peilstabs (3),
Auswerten, ob der Lichtstrahl (5) versetzt zu dem Referenzpunkt (R) auf den Lichtsensor (27) fällt,
Übermitteln eines Steuerbefehls von dem Peilstab (3) an die Basisstation (2), wobei der Steuerbefehl eine Drehbewegung des Lichtstrahls (5) in Richtung zu dem Referenzpunkt (R) veranlasst,
Übermitteln eines Steuerbefehls zum Anhalten der Drehbewegung des Lichtstrahls (5), wenn der Lichtstrahl (5) auf den Referenzpunkt (R) fällt.

10. Steuerungsverfahren nach Anspruch 9, **dadurch kennzeichnet, dass** ein Azimut (a) der Emissionsrichtung (6) des Lichtstrahls (5) von der Basisstation (2) zu dem Peilstab (3) bestimmt wird, nachdem die Drehbewegung angehalten ist.

11. Steuerungsverfahren nach Anspruch 9 oder 10, **dadurch kennzeichnet, dass** eine Entfernung zwischen der Basisstation (2) und dem Peilstab (3) basierend auf einer Laufzeitmessung mit dem Lichtstrahl (5) bestimmt wird, nachdem die Drehbewegung angehalten ist.

12. Steuerungsverfahren nach einem der Ansprüche 10 bis 11, **dadurch kennzeichnet, dass** Bestimmen einer Aktivität einer Handwerkzeugmaschine (38), an welcher der Peilstab (3) angeordnet ist,
Bestimmen des Azimut (a) ansprechend auf eine Aktivität der Handwerkzeugmaschine (38).
